# EUROPEAN PATENT SPECIFICATION

(11) **EP 1 340 005 B1**
(45) Date of publication and mention of the grant of the patent: **02.04.2008**
(21) Application number: 01977342.3
(22) Date of filing: 01.10.2001
(51) Int. Cl.: F16H 7/02, F02B 67/06

(54) **MOTOR/GENERATOR AND ACCESSORY BELT DRIVE SYSTEM**
MOTOR/GENERATOR UND RIEMENANTRIEB FÜR NEBENAGGREGATE
SYSTEME D'ENTRAINEMENT PAR COURROIE DE MOTEUR/GENERATEUR ET D'ACCESSOIRES

(30) Priority: 03.10.2000 US 237448 P
(43) Date of publication of application: 03.09.2003
(73) Proprietor: The Gates Corporation, Denver, CO 80202 (US)
(72) Inventor: LIU, Keming, Sterling Height, MI 48314 (US); OTREMBA, Jerzy, Troy, mI 48098 (US)
(74) Representative: James, Anthony Christopher W.P.
(86) International application number: PCT/US2001/030752
(87) International publication number: WO 2002/029281

(56) References cited:
- EP-A- 1 122 464
- WO-A-02/10615
- DE-A- 4 134 354
- DE-A- 19 804 942
- DE-A- 19 849 659
- DE-A- 19 849 886
- GB-A- 697 171
- US-A- 4 454 236
- US-A- 4 758 208
- US-A- 5 439 420
- US-A- 5 632 697
- US-A- 5 752 891
- US-A- 5 935 032
- PATENT ABSTRACTS OF JAPAN vol. 008, no. 073 (M-287), 5 April 1984 (1984-04-05) -& JP 58 220925 A (BANDOO KAGAKU KK), 22 December 1983 (1983-12-22)
- PATENT ABSTRACTS OF JAPAN vol. 2000, no. 06, 22 September 2000 (2000-09-22) & JP 2000 081100 A (NISSAN MOTOR CO LTD), 21 March 2000 (2000-03-21)

## Description

### Background of the Invention

### Field of the Invention

This invention relates generally to internal combustion engine accessory belt drive systems each having a unitary device performing both the engine starting function and the electrical power generation function, such as a motor/generator sometimes referred to as a Gen-Star. More particularly, it relates to such systems in automotive applications. Specifically, this invention relates to a configuration for belt drive systems each having a motor/generator and each having tensioners.

### Description of the Prior Art

Internal combustion engines commonly use power transmission belt drive systems to tap power from the engine's crankshaft and deliver it to one or more various engine auxiliaries or accessories. In automotive applications, these accessories include power steering pumps, water pumps, air conditioning compressors, fuel pumps, and alternators. Historically, such engines have had the main power takeoff point at the crankshaft protruding from the rear of the engine to which is attached the drive train for driving the wheels to move the automobile. The accessories are driven from a pulley attached to the front of the crankshaft. Each accessory is equipped with a pulley. All of the pulleys are in mechanical communication via one or more power transmission belts trained about them. Some method of tensioning each power transmission belt is provided. The power transmission belt, the pulleys, and devices accomplishing belt tensioning form the accessory belt drive system.

Earlier systems included multiple v-belts. Commonly, each belt was tensioned by manual adjustment and fixing of the position of at least one accessory or idler per belt. These are referred to as locked-center belt drives, because there is no provision for automatic movement of any of the pulleys to accommodate varying condition of the belt or of the drive as a whole. If the belt should stretch or otherwise lengthen, the tension upon the belt would lessen. Further, for proper operation of the belt drive system, the tension of the belt must be set high enough to accommodate the worst case condition. Such worst case conditions can be the result of extremes of temperature, engine operation, or accessory operation.

There has been interest in making the volume, of the engine compartments of automobiles, smaller. To accommodate the smaller compartments, various aspects of the engines have become smaller, including the accessory belt drive systems. This has been accomplished, at least in part, by reducing the number of belts employed. As each belt is removed, and the number of layers extending from the front of the engine is thereby removed, the total distance the belt drive system extends from the front of the engine is reduced. Ultimately, this has resulted in the use of a single serpentine belt for many applications. A serpentine belt is so named because of the way it snakes around the various pulleys in a series of bends, both forward and backward. A v-ribbed or Micro-V (a registered trademark of The Gates Rubber Company) belt is most suited to serpentine applications.

The limitations of the locked-center approach to belt tensioning are exacerbated in serpentine applications. Accordingly, most modern serpentine belt drives include an automatic tensioner whereby the changing conditions of the belt drive system can be better accommodated. In basic form, an automatic tensioner has a framework, which attaches directly or indirectly to the cylinder block of the engine, and a pulley, which presses upon the belt in the plane of rotation of the belt drive system. A moveable member extends between the framework and the pulley and is biased to provide pressure upon the belt, via the pulley. The pressure acts to lengthen the distance about which the belt is trained and thereby causes the belt to be in tension. Various techniques and geometries have been employed to provide the biasing force. Commonly, a resilient member, such a steel spring acts to force the moveable member in a linear or rotating motion which results in the pulley tending to move in a direction toward a surface of the belt which, in turn, tends to increase tension upon the belt.

A tensioner with only these elements provides a somewhat constant force upon the surface of the belt when the system is in a resting state (i.e., the pulleys are not rotating). Dimensional instability, of the drive system caused by time, temperature, or manufacturing variation is accommodated fairly well through the action of the resilient member, at least to the limits of linearity of the resilient member and geometry of the tensioner. Thus, the tension upon the belt remains relatively constant, when the system is at rest, even though the belt may have stretched or the engine may be hot or cold. However, a tensioner with only these elements may not maintain appropriate tension upon the belt for all operating conditions of the system.

An operating belt drive system typically oscillates due to the influences of torsional vibration or other angular acceleration of the crankshaft or accessories, the influences of unbalanced conditions, or other influences. Torsional vibration of the crankshaft occurs, in part, as a result of the distinct impulses delivered to the crankshaft through the combustion cycles of each cylinder and piston combination. The oscillations lead to vibration of the belt. This, in turn, leads to vibration of the moveable portions of the tensioner. Momentum then builds in those moveable portions, modifying the force the pulley exerts upon the belt surface and the tension upon the belt. The changing tension upon the belt can cause unacceptable performance for the belt drive system. In one instance, issues of short-term performance, such as where the belt of the belt drive system slips excessively limiting the system's efficiency or power transmission capability, or is excessively noisy due to slippage or otherwise, can arise. In another instance, the amount of tension necessarily applied to the belt, to have acceptable performance on the short-term, leads to long-term issues such as premature failure of one or more components of the system, including the belt or one or more accessories.

To accommodate these issues and thus improve the performance of tensioners, damping devices have been included in tensioners. Early damped tensioners have included symmetrical damping where movement of the moveable portions of the tensioners are damped approximately equally whether the instantaneous movement is in the direction tending to increase tension upon the belt or in the direction tending to decrease tension upon the belt. Damping combines with the forces supplied by the resilient member to result in a modified biasing, at the pulley/belt interface. Other tensioners have utilized asymmetrical damping. Commonly, such tensioners are damped such that the damping upon the moveable portion is minimal when the tensioner is moving in the belt tensioning direction and maximal when moving in the belt loosening direction.

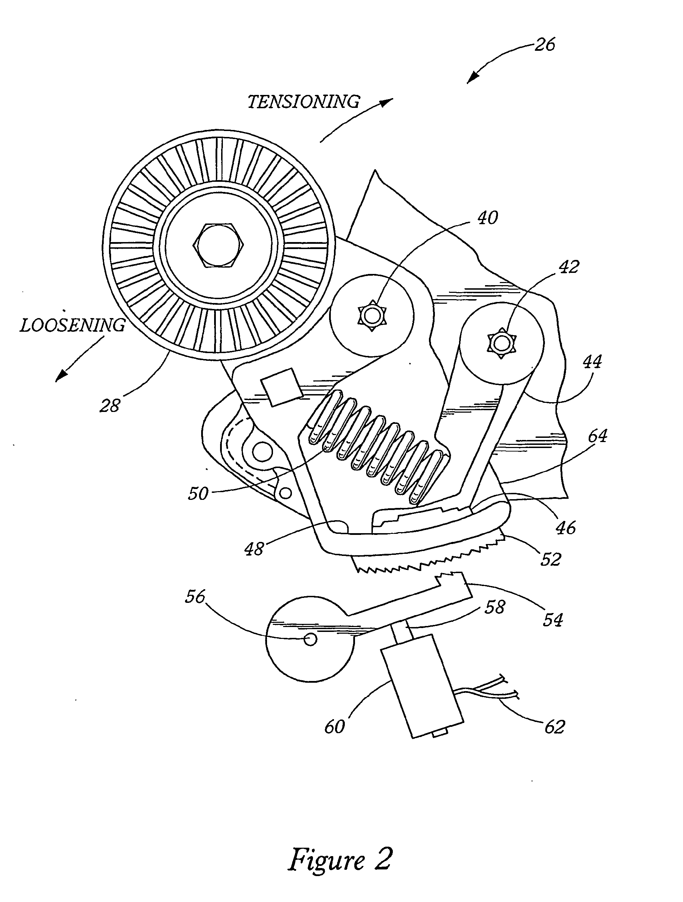

Certain approaches to asymmetrical damping have been passive in nature. The mere direction of movement of the moveable portions creates the different damping rates. In one approach, a shoe is biased against a race at an angle different from normal to the surface of the race. As a result, the relative movement of the shoe and race in one direction tends to lift the shoe from the race. This reduces the pressure at their interface, reduces the friction that gives rise to the damping, and thereby reduces the damping. The other direction tends to wedge the shoe against the race and increase the damping, as depicted in Figure 2. In another approach, described in U. S. Patent to Meckstroth et al. numbered 5,439,420, damping fluid is channeled through different orifices by valves depending upon motion to the moveable portions of the tensioner. When the tensioner moves in the tensioning direction, the fluid passes through a relatively large orifice or channel offering little resistance to the fluid movement and little damping. In the loosening direction, the fluid passes through a relatively small orifice or channel offering greater resistance and greater damping.

Another approach to asymmetrical tensioner damping has been active and can be also be found described in the '420 patent. In '420, two active asymmetrical embodiments are discussed. In one, an electric solenoid deploys brake shoes. When the shoes are deployed, movement of the tensioner is damped in both directions. Additionally, a wedge cooperates with the shoes to modify the force with which they are deployed when the tensioner moves. The damping increases when the tensioner moves in the loosening direction and decreases when the tensioner moves in the tensioning direction. In another, a solenoid deploys a piston, which modifies a fluid path and thereby modifies the damping. Another tensioner approach described in the '420 patent, is to utilize a solenoid, similar to the two active asymmetrically damped tensioners, including a locking factor to switch the tensioner between two modes of operations. In one mode the tensioner operates as an automatic tensioner. In the other mode, its moveable portions are locked, causing the tensioner to act in much the same manner as a locked-center tensioner.

The '420 patent is directed toward solving unacceptable belt drive system performance created by inertial forces caused by the rotating masses of accessories and idler pulleys when rapidly decelerated. As described therein, when sudden rotational deceleration is produced at the crankshaft of the engine "the high rotational inertia of the alternator causes it to remain rotating and causes the alternator to pull the tensioner in a direction so as to loosen the belt [of the specific drive configuration depicted].... as a result the drivebelt (sic) slips ...."

Traditionally, an electric starter motor is provided to spin the crankshaft of the engine so that combustion may be initiated and the engine will begin to run. The starter motor is located near the rear of the engine and is adapted to intermittently engage the rear portion of the crankshaft through a gear train.

Currently, there is increasing pressure to reduce emissions and increase fuel economy, by lowering the weight of the automobile, and reducing the number of under-the-hood components.. An approach taken toward these goals involves combining the function of the starter motor and the function of the alternator into a single device, a motor/generator or a Gen-Star. Also toward the goal of increasing fuel economy, the Gen-Star promotes the use of a feature called "stop-in-idle". This feature is where the engine is allowed to die when it would ordinarily idle, then be restarted when the automobile is expected to resume motion. This feature substantially increases the demands placed upon accessory belt drives. In application, the motor/generator is placed in mechanical communication with the crankshaft via the accessory belt drive. The motor/generator and associated accessory belt drive system tends to be placed at the front of the engine. However, placing these systems at other locations, including the rear of the engine is envisioned.

The advent of Gen-Star systems causes the designer, of power transmission belt drive systems, to face substantial new challenges. A significant challenge, among these, has been to develop a tensioning system that results in acceptable performance, by an accessory belt drive that includes this new device, which not only offers substantial load and rotational inertia, but also adds large driving torque into the accessory belt drive. Further, it provides this large driving torque on an intermittent basis.

A tensioning system stated to be an approach for tensioning an accessory belt drive incorporating a motor/generator is disclosed in the Japanese publication of application numbered JP1997000359071. In that publication, it is disclosed to place an automatic tensioner against the span of the belt which would become the loosest span at the time the motor/generator is in it start mode, but for the presence of the tensioner. This span corresponds to the span that receives the belt immediately after the belt passes over the motor/generator pulley, when the belt is moving in its normal operating direction.

The disclosed tensioning system has been identified as less than optimal. To achieve acceptable performance in the short-term, both long-term performance must be sacrificed, and the width of the belt that must be used to achieve adequate short-term performance is other than optimal.
German patent DE 198 49 886 A discloses a belt drive system for a power plant of the type having a crankshaft pulley, a motor/generator pulley, a first belt tensioner, a first belt tensioner pulley, and a power transmission belt trained about said crankshaft pulley, said motor/generator pulley, and said first belt tensioner pulley, said power transmission belt having spans defined by terminations proximate to each of said pulleys, including intermediate spans beginning at said crankshaft pulley and ending at said motor/generator pulley following the direction of belt travel in normal operation having termination ends and further including a first of said intermediate spans having a crankshaft termination end proximate said crankshaft pulley and a last of said intermediate spans having a first motor/generator termination end proximate said motor/generator pulley, said power transmission belt also having a start-slack-side span beginning at said motor/generator pulley, following the direction of belt travel in normal operation, said start-slack-side span having a second motor/generator termination end proximate said motor/generator pulley and a downstream termination end opposite said second motor/generator termination end, said system having said first tensioner pulley proximate a termination end of an intermediate span not being either said crankshaft termination end or said first motor/generator termination end, and said system having a second tensioner with a second tensioner pulley in contact with said power transmission belt but not proximate to a termination end of said intermediate spans; with means for biasing first and second tensioners in a direction tending to cause said power transmission belt to be under tension.
Accordingly, there remains the need for a tensioning system that provides, at once, adequate short-term performance, adequate long-term performance, optimizes the width of the belt that may be used for any given application, and contains cost and complexity.

### Summary of the Invention

The present invention has as an object the provision of an accessory belt drive system of a configuration that improves the combination of short-term performance, long-term performance, and optimizes belt selection.

This object is achieved by means of a belt drive system with the features of claim 1.

The present invention has as a further object the provision of asymmetrical tensioners in conjunction with a configuration that further optimizes short-term, long-term performance and belt width.

The present invention also has as an object the provision of tensioners including a locking factor in conjunction with a configuration that further optimizes short-term, longterm performance and belt width.

To achieve the foregoing and other objects in accordance with the purpose of the present invention, as embodied and broadly described herein, an accessory drive system including a motor/generator is disclosed herein. The invention is an improved belt drive system and method, for a power plant. The power plant is of the type having a crankshaft pulley, an accessory pulley, a motor/generator pulley, a first belt tensioner, a first belt tensioner pulley, and a power transmission belt trained about the crankshaft pulley, the accessory pulley, the motor/generator pulley, and the first belt tensioner pulley. The power transmission belt has spans defined by terminations proximate to each of the pulleys. These spans include intermediate spans beginning at the crankshaft pulley and ending at the motor/generator pulley, following the direction of belt travel in normal

### Detailed description of the Preferred Embodiments

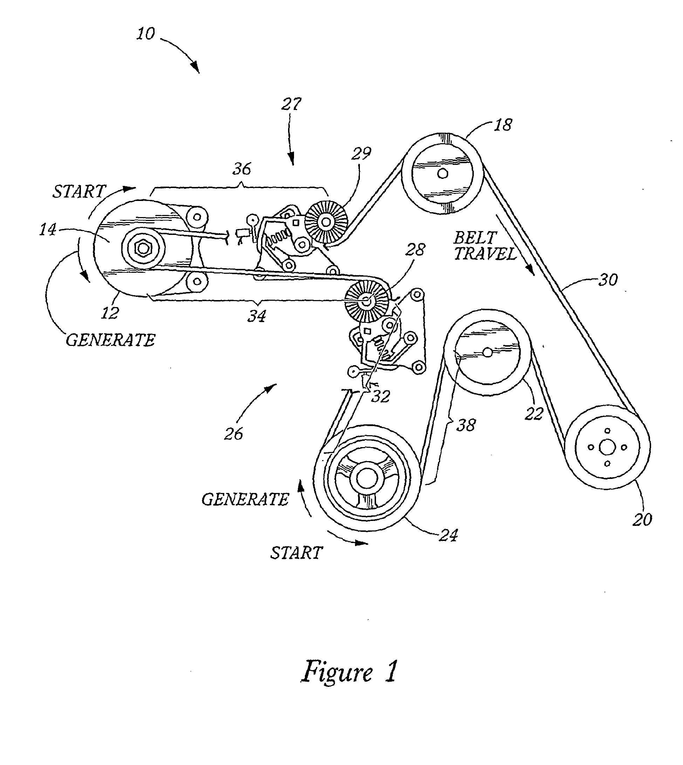

A preferred embodiment of an accessory belt drive system 10 is depicted in Figure 1. It includes motor/generator 12, motor/generator pulley 14, power steering pump pulley 18, air conditioning compressor pulley 20, water pump pulley 22, crankshaft pulley 24, first tensioner 26, first tensioner pulley 28, second tensioner 27, second tensioner pulley 29, and power transmission belt 30. The portions of power transmission belt 30 that would otherwise obscure first tensioner 26 or second tensioner 27 are broken away.

While specific accessory pulleys in a specific geometrical arrangement are depicted, it should be recognized that the instant invention applies to various numbers and combinations of accessories and geometrical arrangements, including both serpentine and non-serpentine configurations, depending upon application. The configuration depicted is serpentine. Thus, power transmission belt 30 would ordinarily be of the v-ribbed type. However, the invention can be practiced with the inclusion of all belt types. Further, this depiction also can be viewed as one plane of belt/pulleys in an accessory belt drive system having multiple belts.

The arrow labeled "belt travel" indicates direction of belt travel during normal operation in both generate and start modes. To move downstream, along the path trained by power transmission belt 30, is to move in the same direction as belt travel. To move upstream is to move in the opposite direction of belt travel.

Moving downstream starting at crankshaft pulley 24, a first intermediate span 32 covers the distance beginning with a termination at the last point of contact between crankshaft pulley 24 and power transmission belt 30, and ending with a termination at the first point of contact between tensioner pulley 28 and power transmission belt 30. A last intermediate span 34 covers the distance beginning at the last point of contact between tensioner pulley 28 and power transmission belt 30 and ending at the first point of contact of motor/generator pulley 14 and power transmission belt 30. If pulleys were added, which contact either first intermediate span 32 or last intermediate span 34, additional intermediate spans would result. Further, start-slack-side span 36 spans the distance from the point of contact with motor/generator pulley 14 to the point of contact with second tensioner pulley 29.

The direction of torque at motor/generator pulley 14 and at crankshaft pulley 24 reverses depending upon the mode of operation of accessory belt drive system 10, as indicated by the arrows labeled "start" and "generate", at each pulley 14 and 24, respectively. In the generate mode, crankshaft pulley 24 supplies all driving torque. Water pump pulley 22, air conditioning compressor pulley 20, power steering pump pulley 18, and motor/generator pulley 14 consume the driving torque, with minor consumption by first tensioner pulley 28 and second tensioner pulley 29. In start mode, motor/generator pulley 14 supplies all driving torque. Crankshaft pulley 24, water pump pulley 22, air conditioning compressor pulley 20, and power steering pump pulley 18 consume the driving torque, with minor consumption by first tensioner pulley 28 and second tensioner pulley 29.

Generally and regardless of mode of operation, if it were assumed that each of the pulleys is allowed to rotate freely, tension on every span would be the same and at static tension. Static tension is the result of the force applied to power transmission belt 30 by either first tensioner 26 via first tensioner pulley 28 or by second tensioner 27 via second tensioner pulley 29 tending to lengthen the distance power transmission belt 30 must travel about all of the pulleys. Normally, and as will described later in detail, either first tensioner 26 or second tensioner 27 provides static tension depending upon mode of accessory belt drive system 10 operation. However, if: 1) accessory belt drive system 10 were in a non-running state; damping of each first and second tensioner, 26 and 27, respectively, was non-existent either because of configuration or time; and first and second tensioners 26 and 27 were reasonably well balanced in terms of the tensioning force each could provide, then the quantum of static tension would be the resultant of the tension supplied by the first and second tensioners 26 and 27 seeking an equal tension point. However, when torque is being supplied and consumed by the various pulleys, of the accessory belt drive system 10, such as when the accessory belt drive system 10 is operating, the tension in each span is modified.

In the conventional or generate mode, crankshaft pulley 24 and generate-tight-side span 38 supplies the driving torque and is the span with the greatest tension, respectively. At each span upstream of generate-tight-side span 38, tension upon power transmission belt 30 is reduced by the effect of each torque consuming pulley immediately preceding the span. Motor/generator pulley 14 presents the greatest load, in most cases. Accordingly, the largest difference in tension, due to load, normally appears when going from start-slack-side span 36 to last intermediate span 34. Overall, the trend continues to the point of where first intermediate span 32, with a termination at crankshaft pulley 24, has the least tension.

In the start mode, for the embodiments depicted herein, motor/generator 12 supplies the driving torque. Last intermediate span 34 is the span with the greatest tension. First intermediate span 32 has tension only slightly reduced by the small load presented by first tensioner pulley 28. Unlike the generate mode, crankshaft pulley 24 presents the greatest load. Likewise, the largest tension differential, due to load, is between first intermediate span 32 and generate-tight-side span 38. Traditionally, optimization is viewed as a function of sequencing the various loads and placement of the tensioner, of the drive layout. As can be seen, a layout that optimizes in the generate mode is substantially different from a layout that optimizes in the start mode.

In the conventional accessory v-ribbed belt drive system, the fundamental design considerations are: 1) belt width (commonly denoted by number of ribs) and type selection related to torque anticipated to be supplied and consumed; and, 2) static tension selection to be below that which stresses either the belt or components of the system to the point of reducing the useful life of either below an acceptable term and above the point where unacceptable slippage begins. Further, belt width and type selection affects useful belt life. Also, there is interplay between these two fundamental design considerations.

A constant goal for the accessory belt drive system designer is to optimize both of these considerations, in light of cost and complexity concerns. Optimization is accomplished through manipulation of many geometric and material parameters known to those of ordinary skill in the art. Among these is arrangement of the driving and driven pulleys based upon inertial or other torque each presents.

Drive systems that include a motor/generator present new and difficult limitations and heretofore have alluded practical optimization. The root of the difficulties lies in the fact that the pulleys which supply the driving torque and present the greatest load and inertial torque are different depending upon mode of operation. Further, larger inertial torque loads are presented than normally encountered in a conventional drive system.

The layout of the depicted preferred embodiment significantly optimizes accessory belt drive system 10 in certain applications for the combination of modes, particularly when coupled with first and second tensioners 26 and 27, of the design and construction depicted in Figure 2. As first tensioner 26 is of the same design and construction as second tensioner 27, only first tensioner 26 is depicted in Figure 2.

First tensioner 26 comprises first tensioner pulley 28, main pivot 40, damper pivot 42, damper arm 44, damper shoe 46, damper race 48, biasing spring 50, ratchet teeth 52, pawl 54, pawl pivot 56, plunger 58, solenoid 60, and conductors 62. First tensioner pulley 28, damper race 48, ratchet teeth 52, biasing spring 50, and main pivot 40 are supported by tensioner frame 64. Biasing spring 50, in this embodiment, is a steel coil. Other resilient members, including elastomeric or pneumatic members, can be employed to provide spring rate biasing. It will be noted that first tensioner 26 is placed between first intermediate span 32 and last intermediate span 34. Second tensioner pulley 29 is placed at the termination of start-slack-side span 36 opposite from its termination at motor/generator pulley 14.

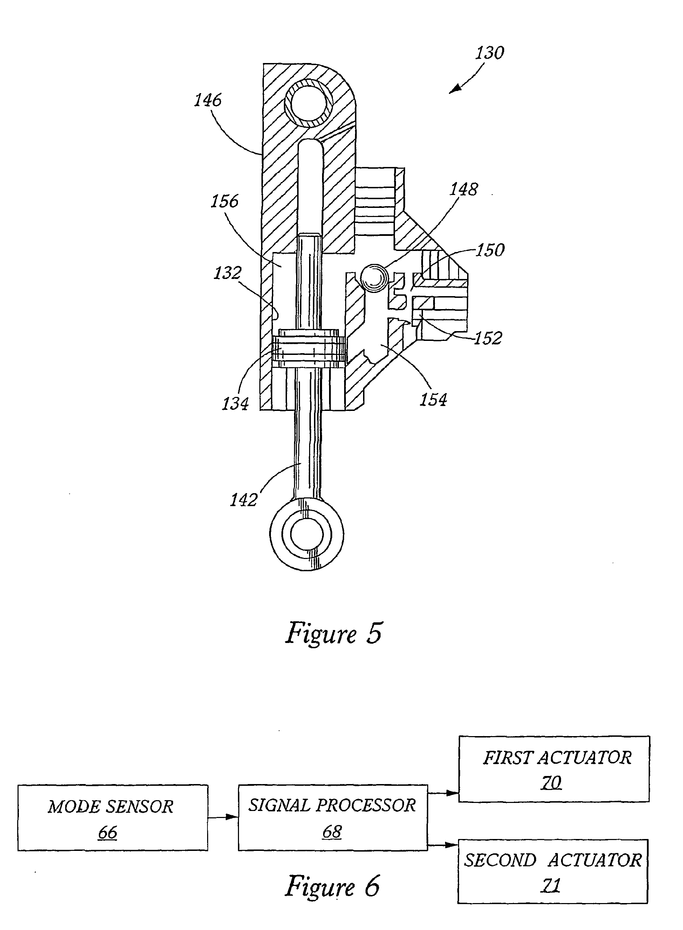

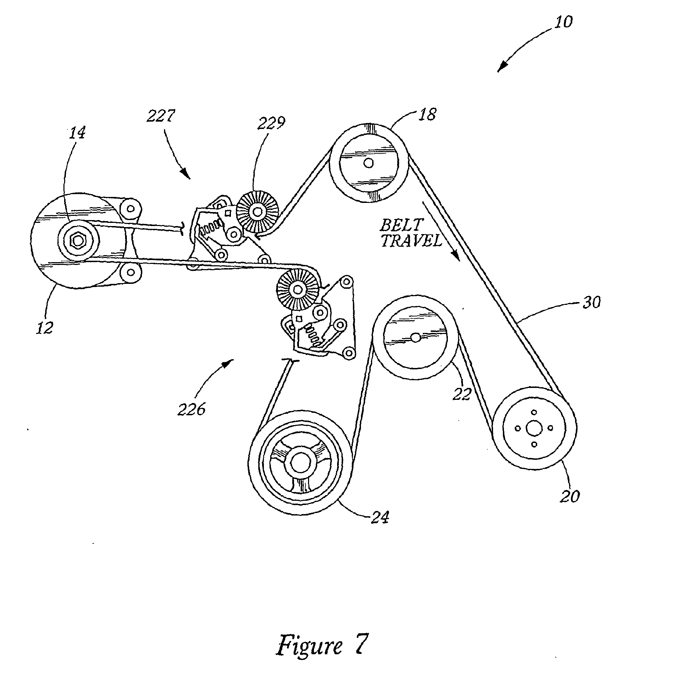

When accessory belt drive system 10 is to be operated in either the generate mode or start mode, mode sensor 66 (Figure 6) senses the presence of the particular mode. The mode sensor can be a separate electrical switch or relay operated anytime the motor/generator 12 receives electrical power to begin to drive accessory belt drive system 10, or can be part of an automotive ignition switch. Mode sensor 66 is commonly found within a controller for the motor/generator. The signal that is produced by mode sensor 66 is passed to signal processor 68, which can be a variety of electrical circuits to process the signal and make it compatible with first and second actuators 70 and 71. The elements of this signal path and associated components, mode sensor 66, signal processor 68, and first and second actuators 70 and 71 are known by those of ordinary skill in the art. First and second actuators 70 and 71, of this preferred embodiment, comprise solenoid 60, having plunger 58 and conductors 62, for each first and second tensioners 26 and 27. While the preferred embodiment contemplates use of electrical signals, sensors, processors, and actuators, mechanical, hydraulic, and pneumatic signals, sensors, processors, and actuators are also envisioned.

When a signal is passed to solenoid 60, it is passed via conductors 62. Solenoid 60 reacts to the signal by raising plunger 58, causing pawl 58 to rotate about pawl pivot 56 to the point of engaging pawl 54 with ratchet teeth 52. When so configured, first or second tensioner pulleys 28 or 29 can ratchet in the tensioning direction but each is restrained, or locked, from moving in the loosening direction.

In the generate mode, first intermediate span 32 and last intermediate span 34 carry the least tension. No signal is passed to first actuator 70. Accordingly, pawl 58 and ratchet teeth 52 are disengaged, as depicted. Thus, first tensioner 26 acts to place the static tension for the entire accessory belt drive system 10, downstream of crankshaft pulley 24 and upstream of motor/generator pulley 14. Biasing spring 50 acts to bias first tensioner pulley 28.

When allowed by condition of power transmission belt 30, biasing spring 50 causes the distanced spanned by biasing spring 50 to lengthen. In turn, first tensioner pulley 28 supported by tensioner frame 64 revolves about main pivot 40 in the clockwise and tensioning direction indicated in Figure 2. Biasing spring 50 causes damper arm 44 to press damper shoe 46 against damper race 48. At the same time, the clockwise motion in conjunction with the geometrical relationship of main pivot with damper pivot causes damper race 46 to move clockwise under damper shoe 46, giving rise to a damping friction. The damping friction tends to subtract from the biasing that first tensioner pulley 28 applies to power transmission belt 30. However, the clockwise movement and relationship of pivots 40 and 42, tend to lessen the mating force of shoe 46 with race 48. Thus, the damping friction is lessened when first tensioner pulley 28 revolves in the tensioning direction.

When the condition of power transmission belt 30 forces first tensioner pulley 28 to revolve in the loosening direction, by overcoming the force provided by biasing spring 50, the counterclockwise movement and relationship of main and damper pivots 40 and 42 tend to increase the mating force of shoe 46 with race 48. Thus, damping friction is increased when tensioning pulley 28 revolves in the loosening direction. The damping friction tends to add to the biasing that first tensioner pulley 28 applies to power transmission belt 30.

Correspondingly, a signal is passed to second actuator 71. The signal to solenoid 60 is passed via conductors 62. Solenoid 60 reacts to the signal by raising plunger 58 forcing pawl 54 to rotate about pawl pivot 56 and causing pawl 54 to engage ratchet teeth 52.

Second tensioner 27 acts as an active asymmetrical tensioner. When so configured with this locking factor, second tensioner pulley 29 can ratchet in the tensioning direction but is restrained, or locked, from moving in the loosening direction. Without the operation of actuator 71, tensioner 27 would be forced to the limits of its travel and allow power transmission belt 30 to be trained about the path of shortest possible distance. The time it would take power transmission belt 30 to assume this new path would depend upon the amount of damping friction supplied by the combination damping shoe 46 and damping race 48. If a different damping configuration were used, as discussed below, then the time would depend upon the level of damping provided by the applied configuration.

However, the engagement of pawl 54 with teeth 52 holds second tensioner 27, which in turn restrains power transmission belt 30 to the path along which it was trained just prior to accessory belt drive system 10 being placed in the generate mode. Accordingly, tension on accessory belt drive system 10 does not lessen substantially when the mode is switched. This configuration and asymmetrical damping provide a substantial benefit toward optimizing accessory belt drive system 10, when operating in the generate mode.

When accessory belt drive system 10 is to be operated in the start mode, mode sensor 66 (Figure 6) senses the presence of the start mode. A signal is passed to first actuator 70 but not to second actuator 71. When so configured, first tensioner pulley 28 can ratchet in the tensioning direction but is restrained, or locked, from moving in the loosening direction. Second tensioner 27 now behaves in the same manner described above for first tension 26 in the generate mode.

As described above, last intermediate span 34 becomes the span with the greatest tension when accessory belt drive system 10 is in the start mode. Start-slack-side span 36 becomes the span with the least tension. Without the operation of actuator 70, first tensioner 26 would be forced to the limits of its travel and allow power transmission belt 30 to be trained about the path of shortest possible distance. The time it would take power transmission belt 30 to assume this new path would depend upon the amount of damping friction supplied by the combination damping shoe 46 and damping race 48. If a different damping configuration were used, as discussed below, then the time would depend upon the level of damping provided by the applied configuration.

However, the engagement of pawl 54 with teeth 52 holds first tensioner 26, which in turn restrains power transmission belt 30 to the path along which it was trained just prior to accessory belt drive system 10 being placed in the start mode. Accordingly, tension on accessory belt drive system 10 does not lessen substantially when the mode is switched. Importantly, this allows the selection of a static tension, via spring rate of biasing spring 50 and overall geometry of tensioner 26, that is significantly lower than that allowed by configurations heretofore available, without short term performance suffering unduly.

When the mode switches, from start to generate, actuator 70 is deactivated and actuator 71 is activated. This allows pawl 54 to disengage from ratchet teeth 54, of first tensioner 26 and pawl 54 to engage ratchet teeth 54 of second tensioner 27 and further allows first tensioner 26 and second tensioner 27 to return to the generate mode described above.

The activation of first and second actuators 70 and 71 can be based strictly upon input from mode sensor 66 or upon additional parameters found in signal processor 68. For instance, time delay can be built into operation of signal processor 68 such that first or second actuators 70 or 71 remain active for a set time after mode sensor 66 indicates that the mode has switched. Further, an advantage may be found in deactivating either first actuator 70 or second actuator 71 after a set time period regardless of when mode sensor 66 signals a mode switch. Further, mode sensor 66 can sense engine r.p.m., engine manifold pressure, torque upon crankshaft pulley 24, or torque upon motor/generator pulley 14 for determining a switch in modes.

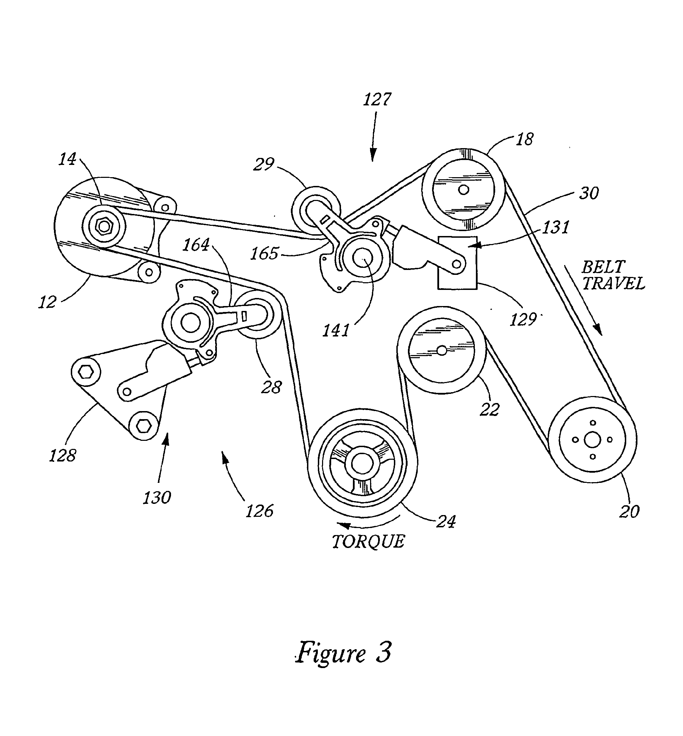

An alternative preferred embodiment is depicted in Figure 3. This embodiment is the same as the prior embodiment with the exception of first and second alternative tensioners 126 and 127, including first and second mounting plates 128 and 129, first and second damping modules 130 and 131, first and second main pivots 140 and 141, and first and second movable members 164 and 165. It is depicted that first and second main pivots 140 and 141 are axially displaced. However, it is contemplated that first and second main pivots 140 and 141 may also be coaxial. It should be recognized that orientation of first and second tensioner moveable members 164 and 165 will be reversed, in terms of which faces forward, to allow first and second tensioner pulleys 28 and 29 to remain on the belt plane depicted.

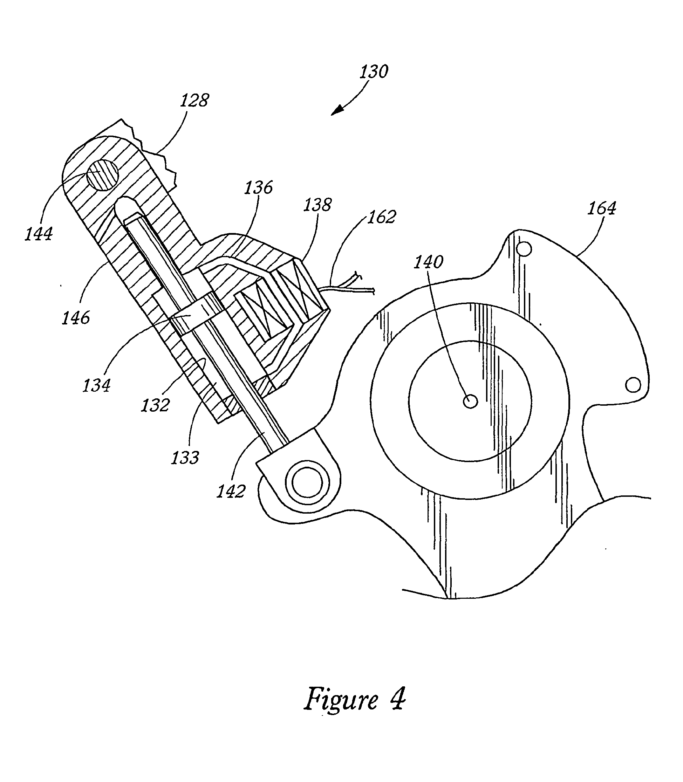

First and second damping modules 130 and 131 are of the same design and construction. Accordingly, only first damping module 130 is depicted in greater detail in Figure 4. Damping module 130 includes cylinder 132, piston 134, bypass tube 136, magnetic coil 138, connecting rod 142, connecting pin 144, body 146, and conductors 162. Cylinder 132 and bypass tube 136 are filled with rheological fluid 133. In this embodiment, rheological fluid 133 is magnetorheological in nature

First and second tensioners 126 and 127 have resilient members (not depicted) that bias first and second moveable members 164 and 165, respectively in the tensioning direction, counterclockwise. The resilient members can include torsion springs, convolute springs, or one of a number of other torque producing resilient members. Further, they can include lever arms acted upon by linear resilient members to produce torque. Movement of first moveable member 164 around first main pivot 140 is mechanically communicated to connecting rod 142. Movement of connecting rod 142 causes piston 134 to move within cylinder 132, which forces rheological fluid 133 to transfer from cylinder 132 on one side of piston 134 to the cylinder 132 on the other side of piston 134 via bypass tube 136. This causes rheological fluid 133 to pass through the core of magnetic coil 138. Energization of magnetic coil 138 via conductors 162 impresses a magnetic field upon magnetorheological fluid 133 and thereby increases the viscosity of magnetorheological fluid 133.

When magnetic coil 138 is not energized, rheological fluid 133 passes through bypass tube 136 in a relatively unrestricted manner. Thus movement of tensioner 126 is relatively free of damping. However, as coil 138 becomes energized, the resulting increase in viscosity of rheological fluid 133 creates a restriction of the flow of rheological fluid 133 through bypass tube 136. There is a direct relationship between the intensity of the field impressed upon rheological fluid 133 and its resulting viscosity. Depending upon the size and shape chosen for bypass tube 136, damping can be elevated to the point of essentially locking first or second tensioners 126 or 127 in place.

The signal path depicted in Figure 6 applies to this embodiment, as well. This embodiment allows additional flexibility on how, when and to what degree damping will applied to first and second tensioners 126 and 127. Selection of mode sensor 66 and manipulation of the logic within signal processor 68 allows fine-tuning of first and second tensioners 126 and 127 damping. For instance, damping can be selected to be at a very high level, but less than that necessary to lock first or second tensioners 126 or 127 in place, immediately upon accessory belt drive system 10 mode switching. First or second tensioners 126 or 127 would accordingly be allowed to respond to the mode change by a slight relaxation in the loosening direction. Then after a brief period, the damping can be increased to lock first or second tensioners 126 and 127 in the new location for the duration of the time accessory belt drive system 10 is in the particular mode. Further, mode sensor 66 can be monitoring the activity or position of first and second tensioners 126 and 127. This information can be processed by signal processor 68 to intelligently damp or lock first and second tensioners 126 and 127 to accommodate accessory belt drive system 10 oscillation or vibration or to mimic the ratcheting effect of the prior described preferred embodiment.

Rheological fluid 133 can also be electrorheological in nature. In such case, electrostatic plates (not depicted) replace magnetic coil 138. The general operation and relationships remain the same. Further, the ratcheting arrangement of the first described preferred embodiment comprising ratchet teeth 52, pawl 54, plunger 58, solenoid 60 and conductors 62 can be incorporated into first or second tensioners 126 or 127 by affixing teeth 52 upon first or second moveable members 164 or 165and affixing the remaining portions in a stationary manner, respectively.

Figure 5 depicts another embodiment specific to damping module 130. Here, hydraulic fluid 156 replaces rheological fluid 133. Accordingly, magnetic coil 138, bypass tube 136, and conductors 162 are absent. In this embodiment, when either first or second tensioner 126 or 127 is moving in the tensioning direction, hydraulic fluid 156 is forced from the lower portion of cylinder 132 into major passageway 154, passed check ball 148 and into upper portion of cylinder 132. Since major passageway 154 is relatively large, tensioning direction of operation offers little damping. When first or second tensioner 126 or 127 moves in the loosening direction, hydraulic fluid 156 is forced from upper portion of cylinder 132 into minor passageway 150, into the lower portion of major passageway 154 then into lower portion of cylinder 132. Minor passageway 150 is relatively small. Thus, substantial damping occurs in this direction of operation of first or second tensioners 126 or 127. Control piston 152 is depicted as substantially retracted. If an actuator, similar to that depicted in Figure 2, is included, control piston 152 can be selectively extended or retracted. The description of operation immediately above assumes control piston 152 to be fully retracted. If control piston 152 is fully extended, first or second tensioner 126 or 127 can still move in the tensioning direction with minimal damping. However, minor passageway 150 is obstructed causing first or second tensioner 126 or 127 to be locked against movement in the loosening direction. This embodiment enjoys the same flexibility of damping, in the loosening direction, as does the embodiment of Figure 4.

An additional embodiment similar to that depicted in Figure 2 is also envisioned. The ratchet teeth 52 and the mating teeth of pawl 54 can each be replaced with a form of teeth that are straight, as opposed to the depicted saw-toothed configuration. Actuation then locks first or second tensioner 26 or 27 in both tightening and loosening direction. Ratcheting becomes unavailable. Further, all these teeth can be replaced with corresponding braking surfaces. This allows large control over damping being offered by first or second tensioner 26 or 27 without bringing damping to the point of locking.

The present invention found in the described embodiments accomplishes significant optimization of long-term and short-term performance while, at the same time, substantially minimizing cost and complexity.

## Claims

1. A belt drive system (10) for a power plant of the type having a crankshaft pulley (24), an accessory pulley, a motor/generator pulley (14), a first belt tensioner (26) a first belt tensioner pulley (28), and a power transmission belt (30) trained about said crankshaft pulley, said accessory pulley, said motor/generator pulley, and said first belt tensioner pulley, said power transmission belt having spans defined by terminations proximate to each of said pulleys, including intermediate spans (32, 34) beginning at said crankshaft pulley and ending at said motor/generator pulley following the direction of belt travel in normal operation having termination ends and further including a first of said intermediate spans having a crankshaft termination end proximate said crankshaft pulley and a last of said intermediate spans having a first motor/generator termination end proximate said motor/generator pulley, the system comprising:
said power transmission belt also having a start-slack-side span (36) beginning at said motor/generator pulley, following the direction of belt travel in normal operation, said start-slack-side span having a second motor/generator termination end proximate said motor/generator pulley and a downstream termination end opposite said second motor/generator termination end,
said system having said first tensioner pulley proximate a termination end of an intermediate span not being either said crankshaft termination end or said first motor/generator termination end, and
said system having a second tensioner (27) with a second tensioner pulley (29) in contact with said power transmission belt but not proximate to a termination end of said intermediate spans;
means for biasing (50) said first and second tensioners in a direction tending to cause said power transmission belt to be under tension;
a direction reversal resistance having an asymmetrical characteristic that is dependent upon direction for resisting movement of said tensioners;
wherein said means for biasing said tensioners and said direction reversal resistance together result in an effective biasing of said tensioners that (a) is no more than that provided by said biasing means when external forces acting upon said tensioners and their respective tensioner pulleys are less than necessary to overcome said biasing means and would thereby tend to cause said first and/or second tensioner pulleys to move in an increasing belt tension direction, and (b) is that which results from said biasing means and said direction reversal resistance when said external forces acting upon said tensioners and their respective tensioner pulleys rare greater than that necessary to overcome said biasing means and would thereby tend to cause said first and/or second tensioner pulleys to move in a decreasing belt tension direction;
said direction reversal resistance being intermittently applied in response to the operation mode of a motor/generator in mechanical communication with said motor/generator pulley, resulting in (a) said first tensioner being either locked against movement in the decreasing belt tension direction or damped at a first damping level in the decreasing belt tension direction when said motor/generator is operating in a motor mode and said first tensioner being damped at a second damping in the decreasing belt tension direction when said motor/generator is operating in a generator mode and (b) said second tensioner being either locked against movement in the decreasing belt tension direction or damped at a first damping level in the decreasing belt tension direction when said motor/generator is operating in a generator mode and said second tensioner being damped at a second damping in the decreasing belt tension direction when said motor/generator is operating in a motor mode.

2. The belt drive system of claim 1, wherein:
said direction reversal resistance comprises means for locking said first tensioner (26) against movement in the decreasing belt tension direction when said motor/generator (12) is operating in a motor mode and not when said motor/generator is operating in a generator mode and means for locking said second tensioner (27) against movement in the decreasing belt tension direction when said motor/generator is operating in a generator mode and not when said motor/generator is operating in a motor mode,

3. The belt drive system of any preceding claim, wherein:
said direction reversal resistance responds to a control input resulting from said motor/generator operation mode.

4. The belt drive system of claim 3, wherein:
said control input is an electrical impulse.

## Patentansprüche

1. Riemenantriebssystem (10) für eine Kraftmaschine, vom Typ mit einer Kurbelwellenriemenscheibe (24), einer Zusatzteil-Riemenscheibe, einer Motor-/Generator-Riemenscheibe (14), einer ersten Riemenspannvorrichtung (26), einer ersten Riemenspannvorrichtungs-Riemenscheibe (28) und einem Kraftübertragungsriemen (30), der um die Kurbelwellenriemenscheibe, die Zusatzteil-Riemenscheibe, die Motor-/Generator-Riemenscheibe und die erste Riemenspannvorrichtungs-Riemenscheibe geführt ist, wobei der Kraftübertragungsriemen Trume aufweist, die durch Abschlussbereiche nahe jeder der Riemenscheiben definiert sind und Zwischen-Trume (32,34) aufweisen, welche in Riemenbewegungsrichtung bei normalem Betrieb an der Kurbelwellenriemenscheibe beginnen und an der Motor-/Generator-Riemenscheibe enden und Abschlussenden aufweisen, und die ferner einen ersten der Zwischen-Trume mit einem Kurbelwellen-Abschlussende nahe der Kurbelwellenriemenscheibe und einen letzten der Zwischen-Trume mit einem ersten Motor-/Generator-Abschlussende nahe der Motor-/Generator-Riemenscheibe aufweisen, wobei das System die Merkmale aufweist, dass:
der Kraftübertragungsriemen ferner einen Schlaffseiten-Beginn-Trum (36) aufweist, der in Riemenbewegungsrichtung bei normalem Betrieb an der Motor-/Generator-Riemenscheibe beginnt, wobei der Schlaffseiten-Beginn-Trum ein zweites Motor-/Generator-Abschlussende nahe der Motor-/Generator-Riemenscheibe und ein stromabwärtiges Abschlussende gegenüber dem zweiten Motor-/Generator-Abschlussende aufweist,
bei dem System die erste Spannvorrichtungs-Riemenscheibe nahe einem Abschlussende eines Zwischen-Trums angeordnet ist, das nicht das Kurbelwellen-Abschlussende oder das erste Motor-/Generator-Abschlussende ist, und
das System eine zweite Spannvorrichtung (27) mit einer zweiten Spannvorrichtungs-Riemenscheibe (29) aufweist, die in Kontakt mit dem Kraftübertragungsriemen, jedoch nicht nahe einem Abschlussende der Zwischen-Trume angeordnet ist;
eine Vorrichtung (50) zum Vorspannen der ersten und zweiten Spannvorrichtungen in einer Spannrichtung des Kraftübertragungsriemens vorgesehen ist;
ein Richtungsumkehrungswiderstand mit einer asymmetrischen Charakteristik vorliegt, die von der Richtung eines Widerstands gegen eine Bewegung der Spannvorrichtungen abhängig ist;
wobei die Vorrichtung zum Vorspannen der Spannvorrichtungen und der Richtungsumkehrungswiderstand zusammen eine aktive Vorspannung der Spannvorrichtungen bewirken, die (a) nicht größer ist als diejenige, die von der Vorspannvorrichtung ausgeübt wird, wenn externe Kräfte, welche auf die Spannvorrichtungen und ihre jeweiligen Spannvorrichtungs-Riemenscheiben einwirken, kleiner als zum Überwinden der Vorspannvorrichtung erforderlich sind und **dadurch** bestrebt wären, eine Bewegung der ersten und/oder zweiten Spannvorrichtungs-Riemenscheiben in Richtung zunehmender Riemenspannung zu bewirken, und die (b) diejenige ist, welche aus der Vorspannvorrichtung und dem Richtungsumkehrungswiderstand resultiert, wenn die externen Kräfte, welche auf die Spannvorrichtungen und ihre jeweiligen Spannvorrichtungs-Riemenscheiben einwirken, größer als zum Überwinden der Vorspannvorrichtung erforderlich sind und **dadurch** bestrebt wären, eine Bewegung der ersten und/oder zweiten Spannvorrichtungs-Riemenscheiben in Richtung abnehmender Riemenspannung zu bewirken;
wobei der Richtungsumkehrungswiderstand in Abhängigkeit von der Betriebsart eines in mechanischer Verbindung mit der Motor-/Generator-Riemenscheibe befindlichen Motors/Generators intermittierend aufgebracht wird, mit dem Ergebnis, dass (a) die erste Spannvorrichtung entweder gegen eine in Richtung abnehmender Riemenspannung erfolgende Bewegung verriegelt oder auf einem ersten Dämpfungsniveau in Richtung abnehmender Riemenspannung gedämpft wird, wenn der Motor/Generator in einer Motor-Betriebsart betätigt wird, und die erste Spannvorrichtung auf einem zweiten Dämpfungsniveau in Richtung abnehmender Riemenspannung gedämpft wird, wenn der Motor/Generator in einer Generator-Betriebsart betätigt wird, und (b) die zweite Spannvorrichtung entweder gegen eine in Richtung abnehmender Riemenspannung erfolgende Bewegung verriegelt oder auf einem ersten Dämpfungsniveau in Richtung abnehmender Riemenspannung gedämpft wird, wenn der Motor/Generator in einer Generator-Betriebsart betätigt wird, und die zweite Spannvorrichtung auf einem zweiten Dämpfungsniveau in Richtung abnehmender Riemenspannung gedämpft wird, wenn der Motor/Generator in einer Motor-Betriebsart betätigt wird.

2. Riemenantriebssystem nach Anspruch 1, bei dem:
der Richtungsumkehrungswiderstand eine Vorrichtung, um die erste Spannvorrichtung (26) gegen eine in Richtung abnehmender Riemenspannung erfolgende Bewegung zu verriegeln, wenn der Motor/Generator (12) in einer Motor-Betriebsart betätigt wird und der Motor/Generator nicht in einer Generator-Betriebsart betätigt wird, und eine Vorrichtung aufweist, um die zweite Spannvorrichtung (27) gegen eine in Richtung abnehmender Riemenspannung erfolgende Bewegung zu verriegeln, wenn der Motor/Generator in einer Generator-Betriebsart betätigt wird und der Motor/Generator nicht in einer Motor-Betriebsart betätigt wird.

3. Riemenantriebssystem nach einem der vorhergehenden Ansprüche, bei dem:
der Richtungsumkehrungswiderstand auf ein Steuersignal reagiert, das aus der Motor/Generator-Betriebsart resultiert.

4. Riemenantriebssystem nach Anspruch 3, bei dem:
das Steuersignal ein elektrischer Impuls ist.

## Revendications

1. Système d'entraînement à courroie (10) pour un moteur du type ayant une poulie de vilebrequin (24), une poulie d'accessoire, une poulie de moteur/générateur (14), un premier tendeur de courroie (26), une première poulie de tendeur de courroie (28) et une courroie de transmission (30) dirigée autour de ladite poulie de vilebrequin, de ladite poulie d'accessoire, de ladite poulie de moteur/générateur et de ladite première poulie de tendeur de courroie, ladite courroie de transmission ayant des longueurs définies par des interruptions proches de chacune desdites poulies, comprenant des longueurs intermédiaires (32, 34) commençant au niveau de ladite poulie de vilebrequin et se terminant au niveau de ladite poulie de moteur/générateur suivant la direction de la course de la courroie en fonctionnement normal ayant des extrémités d'interruption et comprenant en outre une première desdites longueurs intermédiaires ayant une extrémité d'interruption de vilebrequin proche de ladite poulie de vilebrequin et une dernière desdites longueurs intermédiaires ayant une première extrémité d'interruption de moteur/générateur proche de ladite poulie de moteur/générateur, le système comprenant :
ladite courroie de transmission ayant également une longueur de brin mou au démarrage (36) commençant au niveau de ladite poulie de moteur/générateur, suivant la direction de la course de la courroie en fonctionnement normal, ladite longueur de brin mou au démarrage ayant une seconde extrémité d'interruption de moteur/générateur proche de ladite poulie de moteur/générateur et une extrémité d'interruption en aval opposée à ladite seconde extrémité d'interruption de moteur/générateur,
ledit système ayant ladite première poulie de tendeur proche d'une extrémité d'interruption d'une longueur intermédiaire qui n'est ni ladite extrémité d'interruption de vilebrequin ni ladite première extrémité d'interruption de moteur/générateur, et
ledit système ayant un second tendeur (27) avec une seconde poulie de tendeur (29) en contact avec ladite courroie de transmission mais non proche d'une extrémité d'interruption desdites longueurs intermédiaires ;
un moyen destiné à dévier (50) lesdits premier et second tendeurs dans une direction tendant à provoquer la mise sous tension de ladite courroie de transmission ;
une résistance d'inversion de direction ayant une caractéristique asymétrique qui dépend de la direction pour résister au mouvement desdits tendeurs ;
dans lequel ledit moyen destiné à dévier lesdits tendeurs et ladite résistance d'inversion de direction aboutissent ensemble à une déviation efficace desdits tendeurs qui (a) n'est pas supérieure à celle qui est fournie par ledit moyen de déviation lorsque des forces externes agissant sur lesdits tendeurs et leurs poulies de tendeur respectives sont inférieures à ce qui est nécessaire pour surmonter ledit moyen de déviation et tendrait ainsi à amener lesdites première et/ou seconde poulies de tendeur à se déplacer dans une direction de tension de courroie croissante, et (b) est celle qui résulte dudit moyen de déviation et de ladite résistance d'inversion de direction lorsque lesdites forces externes agissant sur lesdits tendeurs et leurs poulies de tendeur respectives sont supérieures à ce qui est nécessaire pour surmonter ledit moyen de déviation et tendrait ainsi à amener lesdites première et/ou seconde poulies de tendeur à se déplacer dans une direction de tension de courroie décroissante ;
ladite résistance d'inversion de direction étant appliquée par intermittence en réponse au mode de fonctionnement d'un moteur/générateur en communication mécanique avec ladite poulie de moteur/générateur, aboutissant au fait que (a) ledit premier tendeur est soit bloqué contre le mouvement dans la direction de tension de courroie décroissante, soit amorti à un premier niveau d'amortissement dans la direction de tension de courroie décroissante lorsque ledit moteur/générateur fonctionne en mode moteur et ledit premier tendeur est amorti à un second amortissement dans la direction de tension de courroie décroissante lorsque ledit moteur/générateur fonctionne en mode générateur et (b) ledit second tendeur est soit bloqué contre le mouvement dans la direction de tension de courroie décroissante, soit amorti à un premier niveau d'amortissement dans la direction de tension de courroie décroissante lorsque ledit moteur/générateur fonctionne en mode générateur et ledit second tendeur est amorti à un second amortissement dans la direction de tension de courroie décroissante lorsque ledit moteur/générateur fonctionne en mode moteur.

2. Système d'entraînement à courroie selon la revendication 1, dans lequel :
ladite résistance d'inversion de direction comprend un moyen pour bloquer ledit premier tendeur (26) contre le mouvement dans la direction de tension de courroie décroissante lorsque ledit moteur/générateur (12) fonctionne en mode moteur et non lorsque ledit moteur/générateur fonctionne en mode générateur et un moyen pour bloquer ledit second tendeur (27) contre le mouvement dans la direction de tension de courroie décroissante lorsque ledit moteur/générateur fonctionne en mode générateur et non lorsque ledit moteur/générateur fonctionne en mode moteur.

3. Système d'entraînement à courroie selon l'une quelconque des revendications précédentes, dans lequel :
ladite résistance d'inversion de direction répond à une entrée de commande résultant dudit mode de fonctionnement en moteur/générateur.

4. Système d'entraînement à courroie selon la revendication 3, dans lequel :
ladite entrée de commande est une impulsion électrique.
